# EUROPEAN PATENT APPLICATION

(11) **EP 1 351 501 A2**
(43) Date of publication of application: **08.10.2003**
(21) Application number: 03251660.1
(22) Date of filing: 18.03.2003
(51) Int. Cl.: H04N 5/93

(54) **Method and system for accessing video data**

(30) Priority: 19.03.2002 GB 0206486
(71) Applicant: BRITISH BROADCASTING CORPORATION, London W1A 1AA (GB)
(72) Inventor: Newell, John Christopher William, Tadworth, Surrey KT20 6NP (GB); Lord, Joseph, Tadworth, Surrey KT20 6NP (GB)
(74) Representative: Abnett, Richard Charles

(57) **Abstract**

A method and system are described for accessing video data stored on a storage device 16. A processor 22 is used to generate a preview sequence comprising video sequences extracted from each video programme in the storage device. The preview sequence may be provided as a grid containing a plurality of video sequences and other textual or graphical data related to the programmes displayed, or may be provided as a sequence of video sequences.

The processor also generates a graphical user interface to allow a user to select a video programme from the video sequences that are displayed. Once selected, the programme corresponding to the video sequence may be viewed, deleted or edited. Furthermore, data related to the programme may be displayed.

The processor can generate the preview sequence, or update the existing preview sequence, as a background process.

## Description

### Background of the Invention

This application relates to a method and system for accessing video data.

Personal Video Recorders (PVRs) allow the storage of television programmes using mass storage devices such as hard disk drives. As technological progress is made, the storage capacity of these devices is likely to increase, and consequently the number of programmes that can be stored on any one mass storage device will increase also. One problem that this will create for users is an increasing difficulty in managing the stored content and finding programmes of interest.

The current solution to this problem is to provide a graphical user interface (GUI) controlled with the use of a remote control unit (RCU). This typically provides textual information about the programmes, sometimes using still images and icons to enhance the information. However, it is often necessary for the user to read a large amount of text in order to find the best programme that is available to watch.

European patent application EP 1,164,791 discloses a screen control method which enables video browsing by displaying, within a semantic browsing screen, a preview video image or a semantic graph which enables a user to grasp the development of the story. The graph and the preview video image allow the user to easily navigate through a selected video feature. Selection of a video feature however is based on a displayed list of titles of video features which are available.

One difficulty arises from the fact that programme titles may not be familiar to the user and therefore may not provide sufficient information for a decision to be made. In this case it is necessary for the user to request more detailed information e.g. a programme synopsis typically comprising textual information. A further difficulty is that the user may not easily recognise that they have already seen the programme or episode in question from textual information alone.

The need to read large amounts of textual information from a TV display and navigate around different screens in the graphical user interface can be tiresome for the user, and it would be of benefit to have a simple and more immediate way in which to see what programmes are currently stored on the PVR. Ideally, this should enable the user to recognise whether the programmes have already been watched.

It has been known for several years in relation to a cable television system to provide a so-called "barker channel" in which the system displays a four-by-four grid consisting of 16 small versions of 16 different live cable channels which are available for viewing. We have appreciated that a similar display could be used to advantage in a stored programme system which did not contain live broadcast material.

### Summary of the Invention

The invention in its various aspects is defined in the independent claims below to which reference should now be made. Advantageous features are set forth in the appendant claims.

A preferred embodiment of the invention is described in more detail below, this taking the form of a method and system for accessing video data stored on a hard disk storage device. A processor is used to generate a preview sequence comprising video sequences extracted from each video programme in the storage device. The preview sequence may be provided as a grid containing a plurality of video sequences and other textual or graphical data related to the programmes displayed, or may be provided as a sequence of video sequences.

The processor also generates a graphical user interface to allow a user to select a video programme from the video sequences that are displayed. Once selected, the programme corresponding to the video sequence may be viewed, deleted or edited. Furthermore, data related to the programme may be displayed.

The processor can generate the preview sequence, or update the existing preview sequence, as a background process.

### Brief Description of the Preferred Embodiment

The preferred embodiment of the invention will now be described, by way of example, and with reference to the drawings in which:
**Figures 1a** and **1b** illustrate examples of preview sequence layouts used for navigation purposes in accordance with the preferred embodiment of the present invention;
**Figure 2** is a schematic illustration of the preferred system;
**Figure 3** is a flow diagram showing the preferred process for generating a preview sequence;
**Figure 4** is a flow diagram showing the preferred preview update process; and
**Figure 5** is a schematic illustration of a preferred output from the system.

### Detailed Description of the Preferred Embodiment

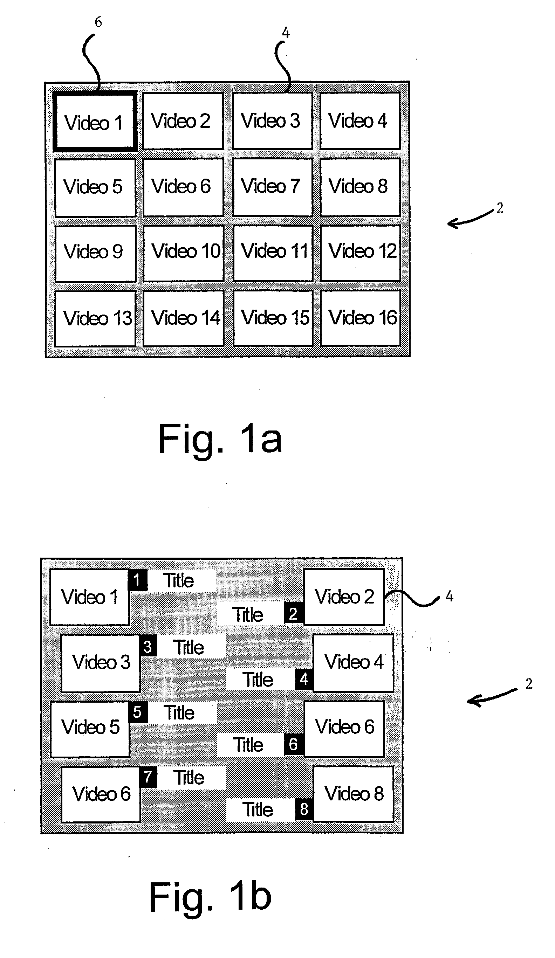

The preferred system provides an interface for navigating through stored content in a personal video recorder (PVR). Examples of the preferred interface 2 are shown in Figures 1a and 1b to which reference should now be made.

Figures 1a and 1b show the output of the preferred system as it might be viewed on a television screen or monitor. The output displays a preview channel and comprises an arrangement of a number of spaces or blanks 4 in which individual video sequences corresponding to programmes currently stored on the PVR can be viewed. The channel is termed a preview channel for convenience, though it might be best thought of as a navigation channel. A number of different arrangements can be provided by the preferred system depending on the preferences of the user. The example of Figure 1a shows a four-by-four grid arrangement of 16 video sequences. An alternative columnar arrangement is shown Figure 1b in which eight video sequences are arranged leaving space for descriptive text to accompany each video sequence.

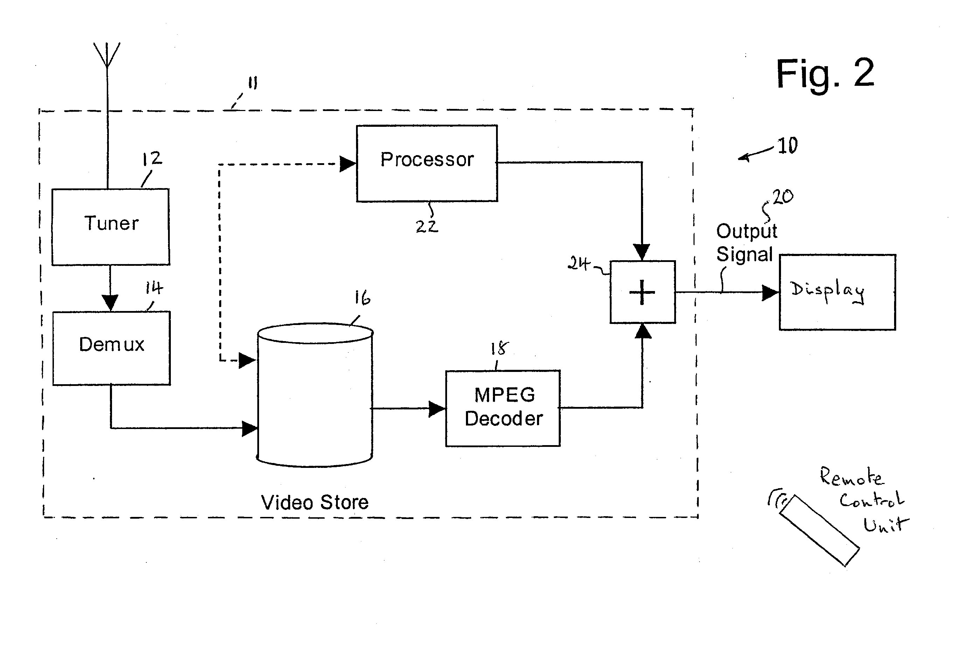

Figure 2, to which reference should now be made, shows an example implementation of a personal video recorder system comprising means to generate the preview sequence interface as described above. The preferred PVR system 10 has a housing 11 and comprises a tuner 12 for selecting and receiving broadcast information. The tuner 12 is connected to demultiplexer 14, which is in turn connected to a digital video storage device 16 such as a hard disk. The video storage device includes writing circuitry for recording programmes received from the demultiplexer 14 and reading circuitry for reading stored video programme data and applying it to a video signal output of the video storage device 16. Video programmes are usually stored in a PVR in a compressed format, such as MPEG-2, and so the preferred system comprises an MPEG decoder 18 connected to the video store for receiving information from the video store 16, for decoding it and for supplying it as an output signal 20. Different compression schemes may be employed in the video store 16, providing the appropriate decoding device 18 is also supplied.

The preferred system also comprises a processor 22 for generating a preview sequence signal and for providing the graphical user interface for the user to interact with the video recorder and control it. In particular, processor 22 provides means for the user to select a video sequence from those displayed in the preview sequence, to view the stored programme corresponding to the selected video sequence, to delete it, or to display further data about it.

The preview sequence signal, which may include the video sequence grid and any graphical user interface supplied by the processor 22, is combined in a mixer 24 with decoded video information from the decoder 18 to produce an output signal 20. The mixer allows the processor 22 to overlay transparent or opaque graphics as and when required to support other standard functions available through the graphical user interface.

Known PVR systems comprise the hardware components shown in Figure 2. However, the processor 22 is usually only used to generate a graphical user interface that consists of text and graphics. For much of the time this processor is idle since for long periods the PVR will not be in use. When the PVR is in use, the processor 22 may only be occupied for brief periods when the GUI needs to be updated and displayed. The fact that the processor is frequently idle is utilised in the preferred system to create and update preview sequences.

In the preferred system the processor 22 has access to video store 16, and can access the compressed video streams stored in the storage system when it would otherwise be idle in order to create a preview sequence. The sequence is not therefore necessarily generated in real time, and is preferably generated using a background process. This non-real-time access is indicated by the use of a dashed line on Figure 2. The storage system 16 may be used to store the intermediate and final results as the processor creates the sequence step by step, as described in more detail below. Once the preview sequence has been generated it can be displayed like any other programme stored in the storage device 16, or alternatively can be played in a loop and presented as if it were a live preview channel. In this arrangement, the preview sequence is preferably played in a continuous cycle and output on a different channel to those used for the display of a selected video programme. The continuous cycling of the preview sequence may a comprise a cycle of individual video sequences and/or a cycle of grids containing a plurality of video sequences. In this case, each grid may be thought of as a 'fragment' of a separate video sequence.

In order to view the preview sequence, the user can select the channel using normal channel selection means. If further preview sequences are generated to display further video programmes, then these are also preferably output on separate respective channels.

A programme currently stored on the PVR may be selected for viewing from the preview channel by selecting the corresponding displayed video programme. In the example shown in Figure 1a, a video sequence may be selected by positioning a highlight box 6 on the desired video sequence and pressing an appropriate key. The highlight box may be moved by the user using cursor keys on a remote control unit, a pointing device such as a trackerball or joystick, or any other appropriate input method known in the art. Appropriate software is provided for the user to position the highlight box and to detect when the user depresses a select or OK button on the remote control unit. Alternatively, in the example shown in Figure 1b a programme may be selected by pressing the numeric key on the keypad of a remote control device corresponding to the number displayed adjacent to the video sequence. No additional channel selection software is required in this case as the normal programme selection facility of the recorder is used to select for application to the output a selected one of the plurality of video programmes and the preview display signal.

It will be appreciated that the preferred system provides an interface that is similar to the "barker channel" provided in cable television systems where a large number of channels are available. In the preferred system however, the preview channel is not a live stream of the programmes that are currently available to watch, but is a preview video sequence itself stored on the PVR. Preferably it may be presented to the user in a continuous loop for example as if it were an additional TV channel. This allows the preview sequence provided by the preferred system to be selected for viewing using any of the usual methods of channel selection.

The format of the preview sequences shown in Figures 1a and 1b are merely illustrative, and the preview sequence may be presented to the user in a variety of ways. The grids of video sequences do not have to be rectangular, but could be distorted to achieve perspective effects or any other desired shape. Also, if the number of stored programmes exceeds the capacity of a single grid, then a second preview sequence grid could be made available. Navigating between two or more preview sequences may be achieved by pressing keys on the remote control, or by moving the highlight box outside the boundaries of the current preview sequence grid for example. In effect, this means that the grid can be larger than the visible screen area. Alternatively, any preview sequence grids that are available could be presented sequentially.

The choice of video sequences may be decided on the basis of any accompanying metadata and user preferences. Metadata is data, supplementary to the main data that is being transmitted, which acts as control data and/or as a means of describing the main data. The metadata may be received from a broadcast stream or via a data network. The use of metadata allows programmes that are likely to be of most interest to the user to be presented earlier than others. As each programme is presented, related textual information may also be displayed.

Selecting a programme in the grid by positioning the highlight box around the corresponding video sequence display preferably causes the corresponding audio signal for that programme to be played, and may cause related text information to be displayed in another area of the screen. Once a programme is selected in this way, the user may evoke a number of other functions, such as viewing the programme, deleting it from the mass storage device, or displaying or editing programme-related information.

Because the preview sequence is not generated from live streams of video information, such as on cable television networks, the information that is displayed as video sequences can be chosen to accommodate different requirements. Preview sequences can be generated, for example, that allow the user to navigate to different sections within a particular programme, such as when segmented programmes have been recorded. These are programmes which consist of a number of distinct sections, identified by accompanying metadata, which the user is able to select and view individually. The preview sequence may be created displaying a part of each section of a programme to allow the user to identify and navigate to that section.

Using any available metadata associated with the video programmes, preview sequences may also be generated for different purposes, such as for displaying different types of themes of programmes, like movies or soap operas for example. Alternatively, programmes may be grouped together for display in a single preview sequence.

In particular, preview sequences may also be generated to display programme trailers thereby enabling the user to select programmes that may be recorded in the future. A trailer may be captured from a live broadcast during a period when the PVR is idle, triggered by a signal that is provided by the broadcaster and that identifies that a trailer is being broadcast and the identity of the programme concerned. Software is provided that allows a user to select a trailer from those presented in the preview sequence for recording. The recording details, such as channel start and stop times for the selected video programme may be obtained from metadata transmitted as part of the trailer broadcast.

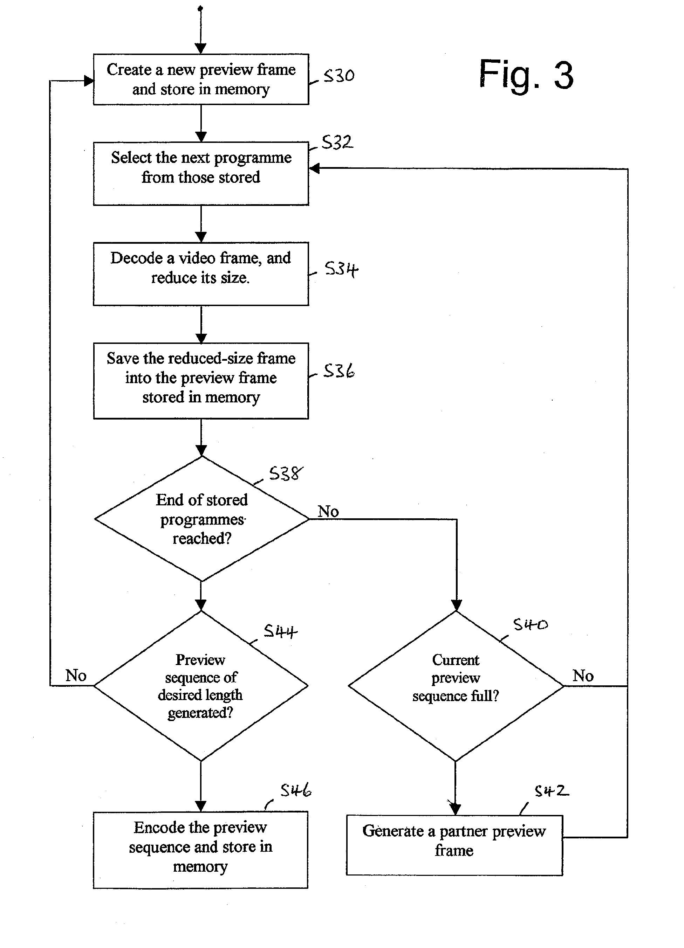

The manner in which the preview channel is formed on the mass storage device will now be described with reference to Figure 3. The first step in the production of a preview sequence is to create a blank preview frame stored in memory. This is illustrated as step S30 in Figure 3. The blank frame essentially defines the format shown in Figure 1a (or Figure 1b). Next, in step S32 a first video programme stored in the storage device 16 is found, and in step S34 a first video frame is extracted from the programme and decoded. A reduced-size inverse-DCT (Discrete Cosine Transform) is preferably employed in the decoding process as it achieves a reduction in size of the resulting decoded video picture, such that it can be made immediately ready for insertion in the space or blanks of the preview sequence frame. Furthermore it is quicker. Decoding of the frame and reduction of the size of the frame could alternatively be carried out in two separate operations.

In step S36, following step S34, the reduced-size decoded frame is saved into the appropriate space or blank 4 of the preview sequence frame.

Steps S32 to S36 are repeated for second, third and subsequent video programmes stored on the hard disk drive until a frame has been extracted from each programme and added to the preview sequence frame. In decision step S38 it is determined whether or not there are stored programmes remaining on the hard disk drive for which a video frame has yet to be extracted. If there are, then control passes to decision step S40 where a check is made to see whether the current preview frame has already been completely filled, such as in the case where sixteen video frames have been decoded and inserted into the example preview frame shown in Figure 1a. If the preview frame is full, then in step S42 a 'partner' preview frame is generated to accommodate the additional video sequences for the programmes. In step S36, it is then the partner preview frame that receives the subsequently extracted video frames. One or more partner preview frames may be created until a video frame has been extracted from each programme stored. The processor 22 keeps track of the number of partner frames and controls navigation between them when the finished preview sequence is being viewed.

Following creation of a partner preview frame in step S42, control flows back to step S32 and the next programme is located. If the current preview frame is not yet full, control flows from step S40 to step S32.

In step S38, once it has been determined that a video frame has been extracted from each programme on the hard disk drive, a determination is made in step S44 of the number of preview sequence frames that have been generated. If sufficient frames have been produced for a preview sequence of the desired length, then control passes to step S46, where the frames of the preview sequence are encoded and recorded on to the storage device 16 as a new video sequence; otherwise control passes back to step S30 where a new preview frame is generated ready to store the next frame to be extracted from each of the stored programmes.

Figure 3 is only an example implementation of how a preview sequence may be generated. Other techniques may also be used, such as extracting and storing the video frames for all of the programmes on the hard disk before generating one or more preview frames into which they may subsequently be integrated. Alternatively, several or all of the video frames for a programme's video sequence may be extracted and integrated into the frames of the preview sequence before repeating the process for subsequent programmes.

Furthermore, encoding of the frames of the preview sequence into a compressed format for storage on the hard disk may begin before all of the preview frames have been produced. This would allow the preview sequence to be generated more quickly than if all of the preview frames were to be generated first.

In step S46, the preview sequence is stored on the hard disk in a compressed format, such as MPEG-2. The knowledge that the individual elements of the grid came from unrelated video sequences is exploited by the processor to minimise the work necessary to generate the compressed format. For MPEG-2 for example, in order to generate the required set of motion vectors used for compression, the block matching methods need only search over the small area within one element of the grid, that is, the region in which a single programme is displayed.

The length of the preview sequence does not necessarily correspond to the length of the stored programmes; preferably one or more minutes of each video programme are extracted and repeated in the preview sequence in an endless loop. The processor 22 may by default select the video from the beginning of each programme in order to generate the preview sequence. However, if the broadcaster or a third party has provided metadata with the programme which indicates key frames or key sections, then it is preferable if the processor selects video starting from a key frame or extracts enough video to include one or more key sections of the programme in the preview sequence.

It will be necessary, should the contents of the video storage system change, such as if a new video programme is recorded or if an old video programme is deleted, to update the preview sequence that has been generated. Preferably, in order to reduce the amount of processing time that this requires, updating the preview sequence is achieved by altering only the individual element of the multi-channel grid corresponding to the programme that has changed. If a new video programme has been added, a video sequence extracted from this programme will preferably be added to the next available space or blank in the preview sequence grid. If a programme has been deleted, and has not been replaced with a subsequent video programme, then it will be necessary to delete the obsolete video sequence from the preview sequence. If however a new video sequence has been added in place of the old, this new video sequence may override the video sequence in the corresponding blank or space.

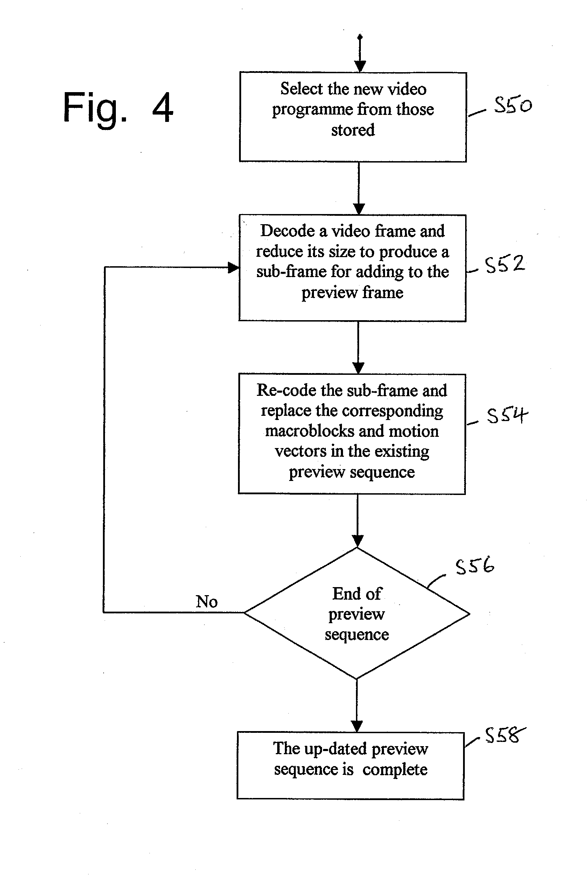

We have appreciated that the macro blocks and motion vectors used in MPEG compression and corresponding to one element can be updated whilst leaving the rest of the preview sequence unchanged. Because each element of the grid is derived from an individual video sequence it need not be related to any other elements by motion vectors. There is no need to decode and then recode the entire preview sequence and the individual element can be updated separately. This process is illustrated by the flow diagram of Figure 4 to which reference should now be made.

Preferably, the previously generated preview sequence remains in compressed form in the video storage system 16 during the update process. The process starts in step S50 with the processor selecting the new video programme. In step S52 a frame of the new video programme is decoded from its compressed form in the storage system and reduced in size for inclusion in the preview sequence. Once the frame has been shrunk to the appropriate size it is recoded in step S54 in order to generate the corresponding macro blocks and motion vectors for the compression technique. The corresponding macro blocks and motion vectors in the existing preview sequence for the section of the grid that is to be updated are then replaced with those generated for the new frame.

Following step S54, a check is made in step S56 to see whether the end of the existing preview sequence has been reached. If it has not been reached then control flows back to step S52 and the subsequent frame of the new video sequence is decoded. If the end of the preview sequence has been reached then the updated preview sequence is completed, illustrated at step S58, and is available to view.

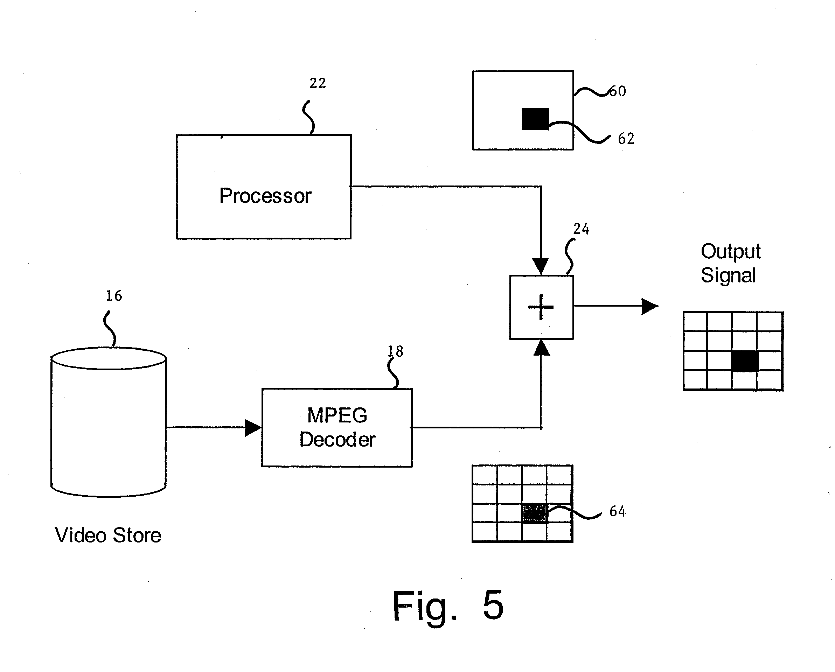

As the update process is preferably carried out by the processor in the background at times when it would otherwise be idle, there may be a need to display a preview sequence before the processor has completed the update process. In this case the current version of the preview sequence may not be in a valid state for navigation purposes. Some programmes on the PVR may have been replaced but the updates reflecting the change not yet added to the preview sequence itself. The preferred system overcomes this problem by employing a mask 60 or graphics overlay to obscure one or more elements of the preview sequence grid that are invalid. The mask comprises opaque section 62 as illustrated in Figure 5 to which reference should now be made. The mask 60 is added to the preview sequence video transmitted to the mixer 24 and is combined with the video output from the decoder 18. In this way invalid video 64 in the preview sequence is obscured and cannot be viewed by the user. The opaque portions of the graphics overlay 60 may display text, an icon or a still image taken from or related to the video programme that will eventually be inserted in that element of the grid. Thus, valid navigation information is available for the user at all times.

In an alternative embodiment to that described so far, the creation and update of a preview sequence can be achieved by exploiting hardware elements of the PVR for MPEG decoding, re-sizing and re-coding operations, rather than doing it all in the processor 22. However, although this has a speed advantage, it is unlikely that it can be achieved without a re-design of these elements and therefore this may be a more expensive option than the preferred method.

In a further alternative embodiment, a preview sequence can be created in real-time on demand, directly from the recorded programmes. However, performance limitations make this difficult to achieve with current technology unless the frame rate of the preview sequence is reduced substantially. One possible approach is to display only the MPEG I-frames of the individual video streams (for ease of decoding) leading to a frame rate of around 2 Hz rather than 25 Hz. This might be satisfactory for navigation purposes, given the reduced size of the individual video elements, and has the advantage that the preview sequence is able to reflect changes to the contents of the PVR instantaneously.

Another approach is to process newly recorded programmes to obtain individual (possibly uncompressed or easily decompressed) sequences that are stored on disk separately, rather than multiplexed and stored together as a preview sequence. The preview channel effect can then be generated on-screen when required by a process that multiplexes the individual sequence in real time. However, this technique is likely to suffer as a result of performance limitations, compared to the preferred method.

It will be appreciated that many other modifications and additions may be made to the system described as will be apparent to those skilled in the art.

## Claims

1. A video recorder unit, comprising:
a housing (11) for the unit;
a storage device (16) within the housing for storing video data making up a plurality of video programmes;
reading means (22) within the housing coupled to the storage device for reading video data from the storage device and applying it to a video signal output (20);
preview signal generating means (22) within the housing coupled to the reading means for access to the storage device and adapted to generate a preview display signal (2) for application to the output, the preview display signal comprising a plurality of video sequences (4) extracted respectively from a plurality of video programmes stored on the storage device (16); and
programme selecting means for selecting for application to the output a selected one of the plurality of the video programmes and the preview display signal.

2. A video recorder unit according to claim 1, wherein the preview signal generating means (22) is adapted to generate a preview display signal (2) comprising a plurality of video sequences arranged for simultaneous display.

3. A video recorder unit according to claim 2, wherein the preview signal generating means (22) is adapted to generate a preview display signal comprising a plurality of video sequences arranged for display in a grid arrangement.

4. A video recorder unit according to claim 2, wherein the preview signal generating means is adapted to generate a preview display signal comprising a plurality of video sequences arranged for display in a columnar arrangement.

5. A video recorder unit according to claim 2, 3 or 4, wherein the preview signal generating means is adapted to generate a preview display signal comprising a plurality of video sequences each with associated text information.

6. A video recorder unit according to claim 5, including means (22) for generating the text information from received metadata relating to a received video programme.

7. A video recorder unit according to any of claims 2 to 6, wherein the preview signal generating means generates a plurality of preview display signals each comprising a respective plurality of video sequences.

8. A video recorder unit according to any of claims 2 to 7, wherein the preview signal generating means is adapted to generate a preview display signal for display in a continuous cycle and for output on a channel separate to that used for the output of a selected video programme.

9. A video recorder unit according to claim 8, wherein the preview signal generating means is adapted to generate a second preview display signal for display in a continuous cycle and for output on a channel separate to that used for the output of a selected video programme and for the output of the first preview display signal.

10. A video recorder unit according to any of claims 2 to 9, wherein the preview signal generating means is adapted to generate a preview display signal according to metadata associated with the video programmes, such that the video programmes included in the preview display signal are displayed according to the type of the programme.

11. A video recorder unit according to any of claims 2 to 10, wherein the preview signal generating means is adapted to generate a preview display signal comprising a plurality of video sequences extracted from the same video programme, the video sequences being extracted from different parts of the video programme, and wherein the programme selecting means is adapted to select the video programme for application to the output, and the point in the video programme from which playback commences in dependence on the video sequence selected.

12. A video recorder unit according to any of claims 2 to 11, wherein the preview signal generating means (22) comprises means (22) for decoding selected portions of video programmes recorded on the storage device, means for combining the decoded portions into a preview display signal, and means (22) for recoding the preview display signal and for recording it on the storage device.

13. A video recorder unit according to claim 12, wherein the preview display signal is recorded in a compressed form which makes use of motion vectors, and wherein when the preview display signal is compressed into the compressed form, motion vectors are generated separately for each video programme contained in the preview display signal.

14. A video recorder unit according to claim 13, wherein the motion vectors in respect of each video programme contained in the preview display signal are generated by searching only the region of the preview display signal containing the video programme.

15. Apparatus for accessing the video data of one or more video programmes stored in memory, comprising:
a memory (16) for storing video data making up a plurality of video programmes; and
a processor (22), having access to the memory, for generating a preview sequence (2) comprising video sequences (4) extracted from the video programmes stored in memory and for providing a user interface;
wherein the processor includes means operable to perform the steps of:
a) extracting a video sequence from each of the stored video programmes in memory;
b) combining the video sequences into a preview sequence, the preview sequence displaying one or more video sequences of video programmes; and
c) storing the preview sequence in memory, such that it can be displayed to a user to provide a video representation of the video programmes stored in memory; and
d) providing a user interface (6) to a user such that they can select a video programme from the previous sequence for access.

16. Apparatus according to claim 15, wherein the user interface provides means of enabling the user to select a video programme from the displayed preview sequence for playback.

17. Apparatus according to claims 15 or 16, wherein the processor additionally provides means operable in response to a user instruction to delete the video data related to the selected video programme from memory.

18. Apparatus according to claims 15 to 17, wherein the processor additionally includes means operable to display descriptive data related to the selected video programme.

19. Apparatus according to any of claims 15 to 18, wherein the processor includes means operable to:
i) extract a first video frame from each stored video programme;
ii) reduce the first video frames in size; and
iii) combine the first video frames into a first composite image frame comprising a first video frame from each stored video programme;
iv) extract a second video frame from each stored video programme;
v) reduce the second video frames in size; and
vi) combine the second video frames into a second composite image frame comprising a second video frame from each stored video programme;
vii) repeat steps i) to vi) with subsequent video frames to produce subsequent composite image frames; and
viii) combine the composite images frames in succession to form the preview sequence.

20. Apparatus according to claim 19, wherein each video frame that has been extracted and reduced in size is inserted into the composite image frame before the next video frame is extracted from the next video programme.

21. Apparatus according to any of claims 15 to 20, wherein the processor includes means operable to:
i) extract a first video sequence from a first stored video programme;
ii) reduce the frames of the first video sequence in size;
iii) insert the first video sequence into the preview sequence;
iv) extract a second video sequence from a second stored video programme;
v) reduce the frames of the second video sequence in size;
vi) insert the second video sequence into the preview sequence; and
vii) repeat steps i) to vi) with subsequent video sequences extracted from subsequent stored video programmes until the preview sequence includes a video sequence extracted from each stored video programme.

22. Apparatus according to any of claims 15 to 21, wherein the processor includes means (22) operable if a stored video programme is deleted from memory or is marked as being no longer of interest to the user, to delete the corresponding video sequence from the preview sequence, or to obscure the display of the video sequence in the preview sequence, and to mark the position of the deleted or obscured video sequence as available to receive a new video sequence.

23. Apparatus according to any of claims 15 to 22, wherein the processor includes means operable to:
extract, if a new video programme is stored in memory, a video sequence from the new video programme; and
insert the video sequence into the next available position in the preview sequence.

24. Apparatus according to any of claims 15 to 23, wherein the preview sequence is stored in compressed form.

25. Apparatus according to claim 24, wherein the compressed form makes use of motion vectors, and when the preview sequence is compressed into the compressed form motion vectors are generated separately for each video programme contained in the preview sequence.

26. Apparatus according to claim 25, wherein the motion vectors in respect of each video programme contained in the preview sequence are generated by searching over only the region of the preview display signal containing the video programme.

27. Apparatus according to claim 19, wherein the composite image frames are stored in compressed form.

28. Apparatus according to claim 22, wherein the preview sequence is stored in compressed form, and the processor includes means operable to:
i) extract a first video frame from a new video sequence;
ii) compress the first video frame into the compressed form;
iii) insert the compressed video frame into the appropriate frame of the preview sequence; and
iv) repeat steps i) to iii) for subsequent frames in the new video sequence.

29. Apparatus according to any of claims 15 to 28, wherein the preview sequence comprises a grid of one or more video sequences viewable simultaneously by a user.

30. Apparatus according to any of claims 15 to 29, wherein the preview sequence comprises a series of preview sequence fragments, each fragment comprising all or part of at least one video sequence, the different fragments of the preview sequence being displayed in a cycle.

31. Apparatus according to any of claims 15 to 30, wherein the video sequence for a stored video programme is extracted in dependence on metadata describing the video programme.

32. Apparatus for recording video data comprising:
a memory (16) for storing video data making up one or more video programmes;
a receiver (12) for receiving a broadcast comprising video preview information relating to programmes that have yet to be broadcast;
a processor (22), having access to the memory, for generating a preview sequence (2) comprising video sequences (4) and for providing a user interface;
wherein the processor includes means operable to perform the steps of:
a) extracting from the preview information one or more video sequences for a video programme that has yet to be broadcast;
b) combining the video sequences into a preview sequence, the preview sequence displaying one or more video sequences of programmes;
c) storing the preview sequence in memory, such that it can be displayed to a user to provide a video representation of the programmes that have yet to be broadcast; and
d) providing means (6) for a user to select a programme from the preview sequence displayed that is to be recorded, the selected video programme being subsequently recorded in memory when it is broadcast.

33. Apparatus according to claim 32, wherein the broadcast is part of a television broadcast.

34. Apparatus according to claim 31 or 32, where the preview sequence comprises a grid containing a plurality of video sequences viewable simultaneously.

35. A method of accessing the video data of one or more video programmes stored in memory, comprising the steps of:
a) extracting a video sequence from each of the stored video programmes;
b) combining the video sequences into a preview sequence, the preview sequence displaying one or more video sequences of video programmes;
c) storing the preview sequence in memory, such that it can be displayed to a user to provide a video representation of the video programmes stored in memory; and
d) providing means for a user to select a video programme from the preview sequence displayed such that the user can access the video data for the selected video programme.

36. A method according to claim 35, wherein accessing the video data for the selected programme comprises playing the video programme to the user.

37. A method according to claim 35 or 36, wherein accessing the video programme for the selected programme comprises deleting the video data from memory.

38. A method according to claim 35 to 37, wherein accessing the video data for the selected programme comprises displaying descriptive data related to the video programme.

39. A method according to any of claims 35 to 38, wherein step a) comprises:
i) extracting a first video frame from each stored video programme;
ii) reducing the first video frames in size; and
iii) combining the first video frames into a first composite image frame comprising a first video frame from each stored video programme;
iv) extracting a second video frame from each stored video programme;
v) reducing the second video frames in size; and
vi) combining the second video frames into a second composite image frame comprising a second video frame from each stored video programme;
vii) repeating steps i) to vi) with subsequent video frames to produce subsequent composite image frames;
vii) combining the composite images frames in succession to form the preview sequence.

40. A method according to claim 39, wherein each video frame that has been extracted and reduced in size is inserted into the composite image frame before the next video frame is extracted from the next video programme.

41. A method according to any of claims 35 to 39, wherein step a) comprises:
i) extracting a first video sequence from a first stored video programme;
ii) reducing the frames of the first video sequence in size;
iii) inserting the first video sequence into the preview sequence;
iv) extracting a second video sequence from a second stored video programme;
v) reducing the frames of the second video sequence in size;
vi) inserting the second video sequence into the preview sequence; and
vii) repeating steps i) to vi) with subsequent video sequences extracted from subsequent stored video programmes until the preview sequence includes a video sequence extracted from each stored video programme.

42. A method according to any of claims 35 to 41, comprising:
deleting, if a stored video programme is deleted from memory or is marked as being no longer of interest to the user, the corresponding video sequence from the preview sequence, or obscuring the display of the video sequence from the preview sequence; and
marking the position of the deleted or obscured video sequence as available to receive a new video sequence.

43. A method according to any of claims 35 to 42, comprising:
extracting, if a new video programme is stored in memory, a video sequence from the new video programme; and
inserting the video sequence into the next available position in the preview sequence.

44. A method according to any of claims 35 to 43, wherein the preview sequence is stored in compressed form.

45. A method according to claim 44, wherein the compressed form makes use of motion vectors, and when the preview sequence is compressed into the compressed form motion vectors are generated separately for each video programme contained in the preview sequence.

46. A method according to claim 45, wherein the motion vectors in respect of each video programme contained in the preview sequence are generated by searching over only the region of the preview display signal containing the video programme.

47. A method according to claim 39, wherein the composite image frames are stored in compressed form.

48. A method according to claim 43, wherein the preview sequence is stored in compressed form, the method comprising:
i) extracting a first video frame from a new video sequence;
ii) compressing the first video frame into the compressed form;
iii) inserting the compressed video frame into the appropriate frame of the preview sequence; and
iv) repeating steps i) to iii) for subsequent frames in the new video sequence.

49. A method according to any of claims 35 to 48, wherein the preview sequence comprises a grid of one or more video sequences viewable simultaneously by a user.

50. A method according to any of claims 35 to 49, wherein the preview sequence comprises a series of preview sequence fragments, each fragment comprising all or part of at least one video sequence, the different fragments of the preview sequence being displayed in a cycle.

51. A method according to any of claims 35 to 50, wherein the video sequence for a stored video programme is extracted in dependence on any available metadata describing the video programme.

52. A method of recording video data comprising the steps of:
a) receiving a broadcast comprising video preview information relating to programmes that have yet to be broadcast;
b) extracting from the preview information one or more video sequence for a video programme that has yet to be broadcast;
c) combining the video sequences into a preview sequence, the preview sequence displaying one or more video sequences of the programmes;
d) storing the preview sequence in memory, such that it can be displayed to a user to provide a video representation of the programmes that have yet to be broadcast; and
e) providing means for a user to select a programme from the preview sequence displayed that is to be recorded, the selected video programme being subsequently recorded in memory when it is broadcast.

53. A method according to claim 52, wherein the broadcast is part of a television broadcast.

54. A method according to claim 52 or 53 wherein the preview sequence comprises a grid of a plurality of video sequences viewable simultaneously.
